# EUROPEAN PATENT APPLICATION

(11) **EP 4 681 865 A1**
(43) Date of publication of application: **21.01.2026**
(21) Application number: 24793070.4
(22) Date of filing: 19.04.2024
(51) Int. Cl.: B23K 35/26, B23K 35/02

(54) **SOLDER ALLOY, SOLDER PASTE, SOLDER BALL, SOLDER JOINT, AND ELECTRONIC DEVICE INCLUDING SOLDER JOINT**

(30) Priority: 19.04.2023 KR 20230051487; 15.06.2023 KR 20230076733
(71) Applicant: Samsung Electronics Co., Ltd., Suwon-si, Gyeonggi-do 16677 (KR); Research & Business Foundation Sungkyunkwan University, Suwon-si, Gyeonggi-do 16419 (KR)
(72) Inventor: LEE, Jongbum, Suwon-si Gyeonggi-do 16677 (KR); SONG, Bongmin, Suwon-si Gyeonggi-do 16677 (KR); LEE, Hoojeong, Suwon-si Gyeonggi-do 16419 (KR); LEE, Byunghoon, Suwon-si Gyeonggi-do 16677 (KR); CHOI, Hoon, Suwon-si Gyeonggi-do 16419 (KR); LEE, Hyundong, Suwon-si Gyeonggi-do 16419 (KR)
(74) Representative: HGF
(86) International application number: PCT/KR2024/005329
(87) International publication number: WO 2024/219886

(57) **Abstract**

Disclosed is a solder alloy having a relatively low melting point and excellent impact resistance without containing Pb. The solder alloy may contain 14-22 mass% of Bi and 16-24 mass% of In, with the remainder comprising Sn and inevitable impurities.

## Description

### TECHNICAL FIELD

The disclosure relates to a solder alloy, a solder paste and a solder ball including the solder alloy, a solder joint formed from the solder alloy, and an electronic device including the solder joint.

### BACKGROUND

An electronic device may include various components. A soldering process using a solder alloy may be performed to physically couple and/or electrically connect the various components.

The soldering process is a process of physically coupling and/or electrically connecting components included in the electronic device by melting and then cooling a solder alloy. During the soldering process, the solder alloy may be rapidly melted in a reflow equipment and then rapidly cooled at room temperature or in a cooling chamber. Meanwhile, in order to improve a manufacturing yield, a temperature required in the reflow equipment is preferably higher than a melting temperature of the solder alloy by about 20 °C to 30 °C.

The solder alloy mainly used in the soldering process has been an SnPb-based alloy. However, the use of an SnPb-based alloy containing Pb has been prohibited by the restricted hazardous substances (RoHS) directive and the like in the early 2000s. Accordingly, lead-free alloys such as SAC305 (an alloy of Sn, Ag, and Cu), an SnBi-based alloy, and the like have been proposed to replace the SnPb-based alloy.

The SAC305 has excellent impact resistance (e.g., relatively low brittleness) and excellent mechanical strength. However, the SAC305 has a relatively high melting point (e.g., about 217 °C). Accordingly, for an efficient soldering process using the SAC305, a relatively high temperature (e.g., about 250°C) needs to be maintained in the reflow equipment. In this case, an electronic device may be damaged (e.g., warping of a circuit board included in the electronic device) due to the high temperature in the reflow equipment.

The SnBi-based alloy has an advantage of having a relatively low melting point (e.g., about 139 °C) and excellent mechanical strength compared to SAC305. However, the SnBi-based alloy has a disadvantage of having relatively high brittleness. Accordingly, a problem in which components joined by a soldering process using the SnBi-based alloy are brittle fractured by an external impact may occur.

The above-described information may be provided as related arts for the purpose of assisting in an understanding of the disclosure. No assertion or determination is made as to whether any of the above-described content may be applied as prior arts with respect to the disclosure.

### DISCLOSURE

### TECHNICAL PROBLEM

Accordingly, solder alloys without Pb having a relatively low melting point, excellent mechanical strength, and excellent impact resistance are required.

### TECHNICAL SOLUTION

In order to solve the above-described problem, the solder alloy according to embodiments comprises 14 to 22 wt% of Bi, 16 to 24 wt% of In, and the balance Sn and inevitable impurities.

In order to solve the above-described problems, a solder paste, a solder ball, a solder joint, and an electronic device according to the embodiments are provided.

### ADVANTAGEOUS EFFECTS

According to an embodiment, a solder alloy that does not include Pb, which is designated as a harmful substance and is prohibited from being used, may be provided.

According to an embodiment, a solder alloy having a relatively low melting point may be provided.

According to an embodiment, a solder alloy having relatively low brittleness and having relatively high shear strength may be provided.

According to an embodiment, a solder paste including the solder alloy, a solder ball comprising the solder alloy, a solder joint formed from the solder alloy, or an electronic device including the solder joint may be provided.

### BRIEF DESCRIPTION OF THE DRAWINGS

FIGS. 1A, 1B, and 1C are graphs showing results of measuring, by using the DSC, the melting points of solder balls manufactured from solder alloys having compositions J1 to J17.
FIGS. 2A, 2B, and 2C are images showing cross sections of solder balls manufactured from solder alloys having compositions J1 to J17 and phase distributions in the cross sections.

### DETAILED DESCRIPTION

Embodiments of the disclosure provide a solder alloy, a solder paste and a solder ball including the solder alloy, a solder joint formed of the solder alloy, and an electronic device including the solder joint.

### SOLDER ALLOY

In an embodiment, the solder alloy may include Bi, In, and Sn and inevitable impurities. Here, "inevitable impurities" may mean impurities, which is unintentionally added compositions, inadvertently added in the manufacturing process, and may mean less than about 0.1 wt% of impurities based on the total weight of the solder alloy.

In an embodiment, the solder alloy may include 14 to 22 wt% of Bi, 16 to 24 wt% of In, and the balance of Sn and inevitable impurities. Preferably, the solder alloy may include 14 to 21 wt% and 17 to 24% wt of Bi and In respectively, more preferably 16 to 21 wt% and 17 to 22 wt% of Bi and In respectively, and even more preferably 18 to 21 wt% and 17 to 20 wt% of Bi and In respectively. When the contents of Bi, In, and Sn included in the solder alloy satisfy the above numerical ranges, the solder alloy may have relatively high shear strength after a heat treatment process (e.g., a process of cooling the solder alloy after melting, such as a soldering process), and at the same time, each of a Bi single phase (Bi single phase: has high brittleness due to having a trigonal structure) and a γ-InSn phase (which has high brittleness due to a hexagonal structure) is substantially not present in the solder alloy, or is present in a very small content, so that the solder alloy may have relatively low brittleness. That is, the solder alloy may have excellent mechanical strength and excellent impact resistance after the heat treatment process.

In an embodiment, the liquidus temperature of the solder alloy may be about 180-190 °C, and the solidus temperature may be about 150-160 °C. In this case, the melting point of the solder alloy may be between the solidus temperature and the liquidus temperature (e.g., about 150-180 °C). That is, the melting point of the solder alloy may be set within a relatively low temperature range.

In an embodiment, the solder alloy may include 59 to 63 wt% of Sn. Accordingly, the melting point of the solder alloy may be set within a relatively low temperature range of about 150 to 180°C, and the impact resistance of the solder alloy may be improved.

In an embodiment, the solder alloy may further include an additive for improving reliability of the solder alloy.

For example, the additive may include an additive (e.g., a rare earth element and/or Ag) for improving spreadability when the solder alloy is melted.

For example, the additive may include an additive (e.g., Zn) for fine grain induction in the solder alloy.

For example, the additive may include an additive (e.g., Cu, P, and/or Ti) for improving spreadability and increasing tensile strength of the solder alloy.

For example, the additive may include an additive (e.g., Ni, Sb, Co, and/or Ga) for inhibiting growth of an intermetallic component (IMC) during thermal aging.

For example, the additive may include an additive (e.g., carbon nanotube (CNT), graphene, and/or graphite) for improving shear strength of the solder alloy and improving thermal conductivity and electrical conductivity.

For example, the additive may include an additive (e.g., Al₂O₃) for improving tensile strength, reducing a corrosion rate, and inducing a fine structure of the solder alloy.

### SOLDER PASTE

In one embodiment, the solder paste may comprise a powder of the solder alloy and a flux.

The powder of the solder alloy may be obtained by processing the solder alloy according to the above-described embodiments of the disclosure into a powder form.

The flux may comprise various substances known in the art. For example, the flux may comprise a binder, an activator, a thixotropic agent, and/or a solvent. The binder may serve to fix the powder of the solder alloy mixed with the flux and impart a certain level of viscosity and settling stability to the flux. The activator may serve to remove an oxidized layer of the powder of the solder alloy and prevent re-oxidation in a soldering process. The thixotropic agent may be added to improve printability of the solder paste. The solvent may be added to adjust the viscosity of the solder paste.

### SOLDER BALL

In one embodiment, the solder ball may be manufactured from the solder alloy according to embodiments of the invention described above.

The solder ball may have various known shapes. For example, the solder ball may have a spherical shape with a particle diameter of about 20-40 micrometers. Also, the solder ball may be manufactured by various known methods. For example, the solder ball may be manufactured by melting the solder alloy and then cooling to have a spherical shape with a constant particle diameter.

### SOLDER JOINT

In one embodiment, the solder joint may be formed from the solder alloy in accordance with embodiments of the invention described above.

The solder joint may include various components that include the solder alloy and that physically couple and electrically connect different components included in the electronic device. For example, the solder joint may include a solder ball that is physically coupled and electrically connected to one side of a semiconductor chip, and a heat-treated product of a solder paste that physically couples and electrically connects the solder ball and a printed circuit board, and the solder ball and/or the heat-treated product of the solder paste may be manufactured from the solder alloy according to the above-described embodiments of the present invention. Here, the heat-treated product of the solder paste may mean a product that remains after a flux component included in the solder paste is removed by melting and cooling in a soldering process.

In one embodiment of the disclosure, the solder joint may be substantially free of a Bi single phase and a γ-InSn phase. As described above, each of the Bi single phase and the γ-InSn phase has relatively high brittleness. Therefore, the brittleness of the solder joint may be relatively low due to the solder joint being substantially free of the Bi single phase and the γ- InSn phase.

### ELECTRONIC DEVICE

The electronic device is not particularly limited in its type as long as it includes the solder joint formed from the solder alloy according to the above-described embodiments of the disclosure. For example, the electronic device may be a device including a solder joint that physically couples and electrically connects a printed circuit board and a semiconductor chip.

The electronic device may be a device in various forms. The electronic device may include, for example, a portable communication device (e.g., a smartphone), a computing device, a portable multimedia device, a portable medical device, a camera, a wearable device, or a home appliance. The electronic device according to embodiments of the disclosure is not limited to the above-described devices.

Hereinafter, embodiments of the disclosure will be described in more detail through examples. However, these examples are merely for facilitating understanding, and the scope of the disclosure is not limited to these examples in any sense.

### Example: Solder Balls Made Using Solder Alloys Having Compositions J1 to J17

Solder balls were prepared using solder alloys having compositions J1 to J17. The compositions J1 to J17 are shown in Table 1 below.

**[Table 1]**

| Composition | Bi (wt %) | In (wt %) | Sn |
|---|---|---|---|
| J1 | 27 | 11 | balance |
| J2 | 26 | 12 | balance |
| J3 | 25 | 13 | balance |
| J4 | 24 | 14 | balance |
| J5 | 23 | 15 | balance |
| J6 | 22 | 16 | balance |
| J7 | 21 | 17 | balance |
| J8 | 20 | 18 | balance |
| J9 | 19 | 19 | balance |
| J10 | 18 | 20 | balance |
| J11 | 17 | 21 | balance |
| J12 | 16 | 22 | balance |
| J13 | 15 | 23 | balance |
| J14 | 14 | 24 | balance |
| J15 | 13 | 25 | balance |
| J16 | 12 | 26 | balance |
| J17 | 6 | 32 | balance |

### Experimental Example 1: Measurement of Melting Points of Solder Balls

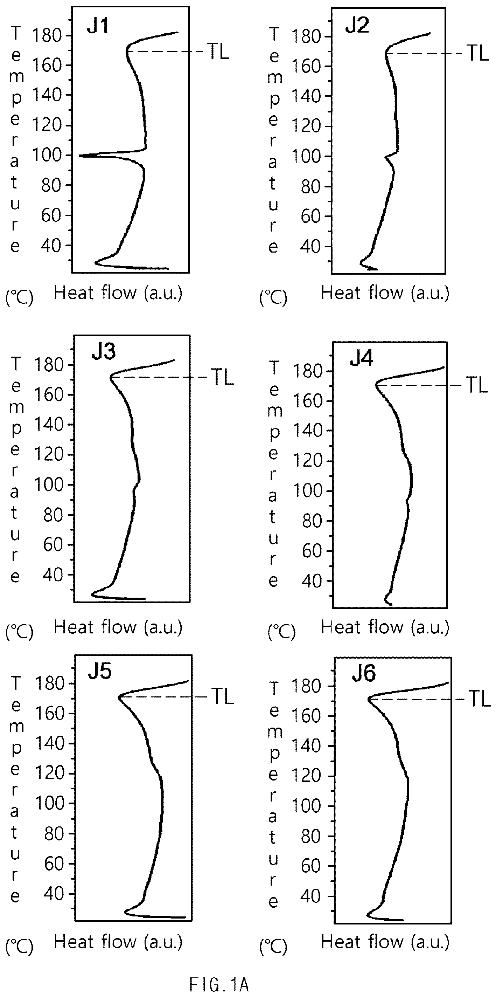

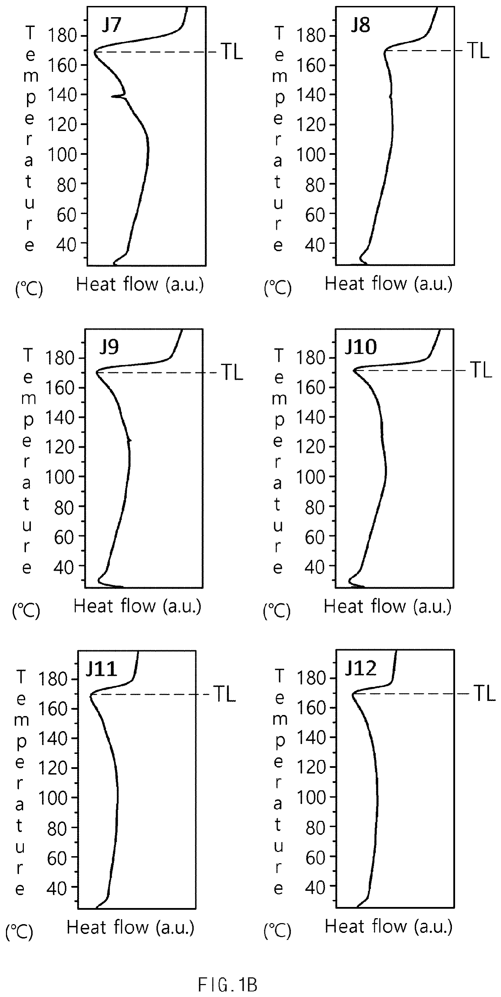

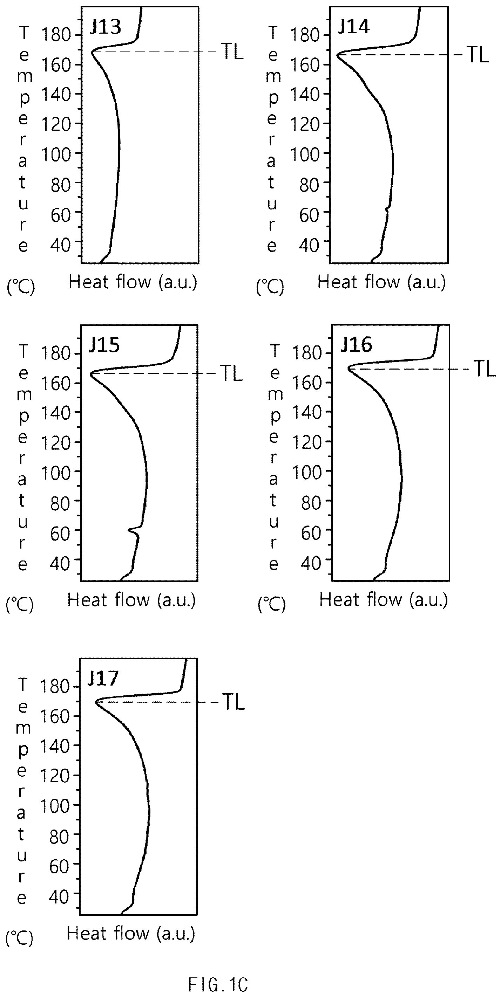

The melting points of the solder balls according to one embodiment were measured using differential scanning calorimetry (DSC), and the results are shown in FIGS. 1A, 1B, and 1C.

Referring to FIGS. 1A, 1B, and 1C, it was found that the solder balls manufactured from the solder alloys having compositions J1-J17 have a melting point (FL) in a relatively low temperature range between 155-175 °C.

### Experimental Example 2: Measurement of Phase Distribution at Cross-Section of Solder Ball

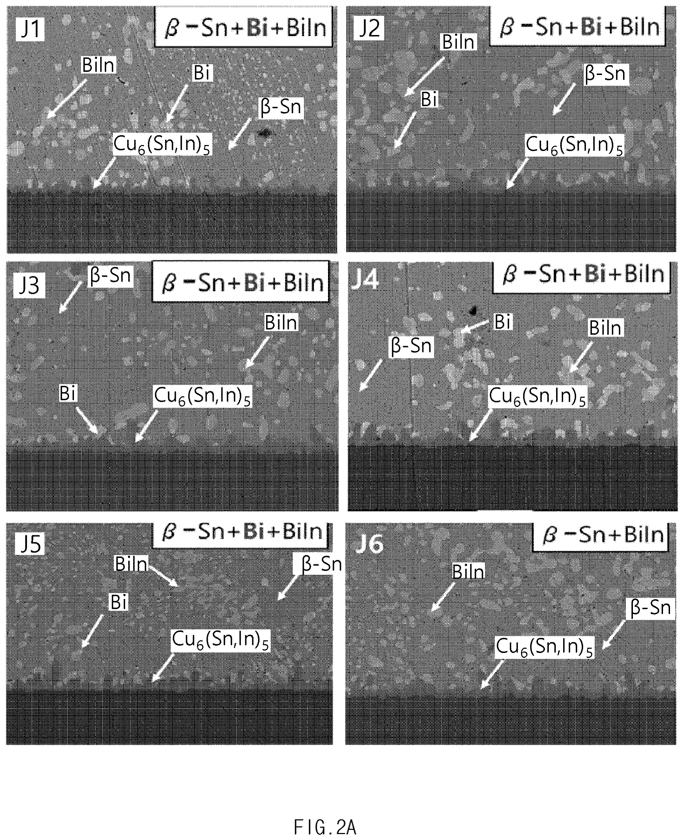

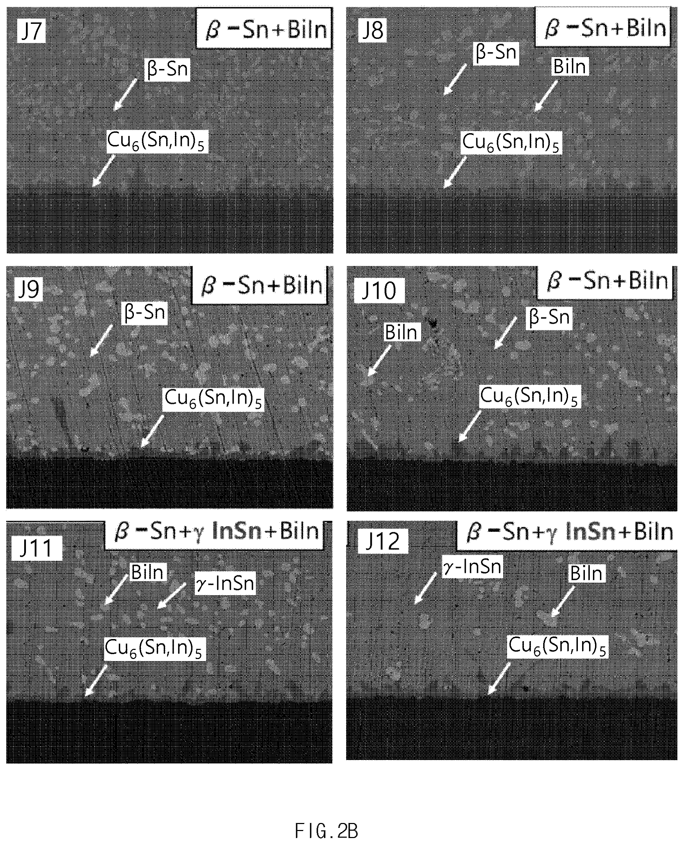

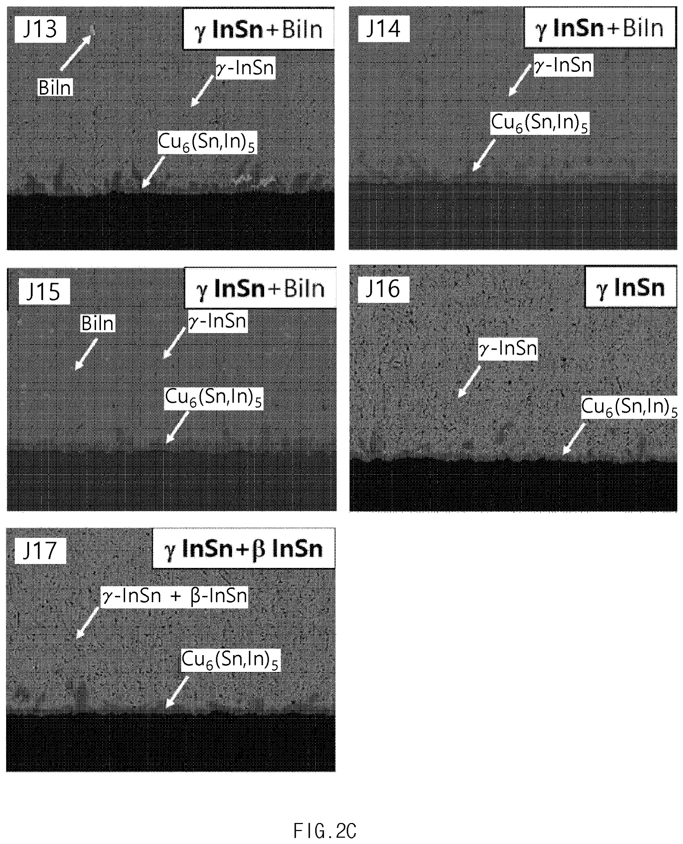

After taking a cross-section of the solder balls according to an embodiment, images were acquired by a scanning electron microscope (SEM), and the images were analyzed by an energy dispersive spectrometer (EDS) to examine the phase distribution in the cross-section of the solder balls, and the results are shown in FIG. 2.

### 2-1. Examination of the Presence of the Bi Single Phase in Cross-Sections of the Solder Balls

Referring to FIGS. 2A, 2B, and 2C, the presence of a Bi single phase was identified in solder balls manufacture from solder alloys with compositions J1 to J5.

In contrast, it was found that the solder balls manufactured from solder alloys having compositions J6 to J17 were substantially free of the Bi single phase.

In case that the solder alloy comprising 23 wt% of Bi, the Bi single phase was present in the solder ball, but in case that the solder alloy comprising 22 wt% of Bi, the Bi single phase substantially did not exist in the solder ball.

This is presumed because when the content of Bi in the solder alloy is less than a certain content, most of Bi reacts with In in the solder ball to preferentially form a BiIn phase, so that a Bi single phase having relatively high brittleness is not substantially formed, but when the content of Bi contained in the solder alloy is a certain content or more, Bi remaining even after the BiIn phase is formed in the solder ball forms the Bi single phase.

### 2-2. Examination of presence of γ-InSn Phase in Cross-Section of the Solder Balls

Referring to FIGS. 2A, 2B, and 2C, it was found that the γ-InSn phase was substantially absent in the solder balls manufactured from the solder alloys with compositions J1 to J10.

In contrast, it was found that the γ-InSn phase was present in the solder balls manufactured from the solder alloys with the compositions J11 to J17.

That is, when the solder alloy comprises 21 wt% of In, the γ-InSn phase was present in the solder balls, but when the solder alloy comprises 20 wt% of In, the γ-Insn phase was substantially not present in the solder balls.

It is presumed that this is because the content of the γ-InSn phase present in the solder ball generally increases as the wt% of In in the solder alloy increases.

### Experimental Example 3: Evaluation of Brittleness and Shear Strength Maximum of the Solder Balls

Multiple fracture experiments of solder balls manufactured from solder alloys with compositions J1 to J17 were conducted. The experiments were conducted by standard measurement of JSDE22-B 117A, and the resulting shear strength maximum value (average value) and ductile fracture ratio of the solder balls are shown in Table 2 below.

In Table 2 below, the maximum shear strength value (average value) means a maximum stress value at which the solder ball is not structurally broken, and the higher the shear strength maximum value may indicate the better the mechanical strength of the solder ball.

In Table 2 below, the ductile fracture ratio refers to a ratio in which the solder ball exhibits a ductile fracture behavior when the solder ball is broken, and a higher ductile fracture ratio indicates lower the brittleness, which means the solder ball has better impact resistance.

**[Table 2]**

| Composition | Shear Strength Maximum (Average Value, MPa) | Ductile Fracture Ratio (%) |
|---|---|---|
| J1 | 1206.56 | 0 |
| J2 | 1362.35 | 0 |
| J3 | 1201.75 | 0 |
| J4 | 1150.63 | 0 |
| J5 | 1042.73 | 10 |
| J6 | 1160.53 | 30 |
| J7 | 1133.79 | 70 |
| J8 | 1145.55 | 80 |
| J9 | 1019.20 | 90 |
| J10 | 1058.46 | 90 |
| J11 | 1037.36 | 60 |
| J12 | 1027.58 | 70 |
| J13 | 1097.93 | 50 |
| J14 | 1024.03 | 40 |
| J15 | 975.67 | 50 |
| J16 | 870.97 | 70 |
| J17 | 632.98 | 100 |

### 3-1. Evaluation of Shear Strength of Solder Balls

Referring to Table 2 above, the solder balls manufactured from the solder alloys having compositions J1 to J14 exhibited improved shear strengths of approximately 1000 MPa or more.

On the other hand, the solder balls manufactured from the solder alloy with composition J15 exhibited a shear strength of approximately 975 MPa, which was found to be a level of shear strength comparable to the shear strength of solder balls made of conventional SAC305.

In contrast, solder balls made from solder alloys having compositions J16 and J17 exhibited low shear strengths of 900 MPa or less.

From this, it can be understood that when the content of In is excessively high and the content of Bi is excessively low, the shear strength of the solder ball decreases, thereby reducing the mechanical strength of the solder ball.

### 3-2. Evaluation of Brittleness of Solder Balls

Referring to Table 2 above, it was found that the solder balls manufactured from the solder alloys having the compositions J1 to J4 exhibited a ductile fracture rate of 0%, while the solder balls manufactured from the solder alloy having composition J5 exhibited a ductile fracture rate of 10%, which is a ductile fracture rate at a level similar to the ductile fracture rate of the conventional Sn-Bi based alloys known to have relatively high brittleness.

In contrast, the solder balls manufactured from the solder alloys having compositions J6 to J17 were found to have relatively high ductile fracture rates.

This is presumed to be because when the content of Bi contained in the solder alloy is less than a certain content, most of Bi reacts with In in the solder ball to preferentially form a BiIn phase, so that a Bi single phase having relatively high brittleness is not substantially formed.

On the other hand, the solder ball manufactured from the solder alloy having the composition J10 exhibited a very excellent ductile fracture ratio of 90%, but in the case of the solder ball manufactured from the solder alloy having compositions J11 to J14, the ductile fracture ratio generally tended to decrease as the content of In increased, compared to that of the solder alloy with composition J10. In addition, the solder ball manufactured from the solders alloy with composition J14 exhibited a ductile fracture ratio of 40%, but in the case of the solders ball manufactured from the solder alloy with compositions J15 to J17, the ductile fracture ratio generally tended to increase as the content of In increased, compared to solder alloy having composition J14.

This is presumed to be because, when the In content in the solder alloy is within a certain range (e.g., when the solder alloy comprises about 20 to 24 wt% of In), the effect of increased brittleness of the solder ball due to an increase in the In content of the solder alloy and the resulting increase in the γ-InSn phase content in the solder ball is relatively significant. However, when the In content in the solder alloy exceeds a certain range (e.g., the solder alloy comprises more than about 24 wt% of In), the effects of increased ductility of the solder ball due to an increase in the In content of the solder alloy and the resulting increase in the β-InSn phase content becomes relatively more significant.

It should be understood that the various embodiments of the present disclosure and the terms used therein are not intended to limit the technical features described in the present disclosure to the specific embodiments, but include various changes, equivalents, or replacements of the corresponding embodiment. With respect to the description of the drawings, similar reference numerals may be used for similar or related elements. The singular form of a noun corresponding to an item may include one or more items unless the context clearly indicates otherwise. In the present document, each of phrases such as "A or B", "at least one of A and B", "at least one of A or B", "A, B, or C", "at least one of A, B, and C", and "at least one of A, B, or C" may include any one of the items listed together in the corresponding one of the phrases, or all possible combinations thereof. Terms such as "first", "second", or "first" may be simply used to distinguish a corresponding element from another corresponding element, and do not limit the corresponding elements in other aspects (e.g., importance or order).

## Claims

1. A solder alloy containing 14 to 22 wt% of Bi, 16 to 24 wt% of In, and the balance of Sn and inevitable impurities.

2. The solder alloy of claim 1,
wherein the solder alloy comprises 14 to 21 wt% of Bi and 17 to 24 wt% of In.

3. The solder alloy of claim 2,
wherein the solder alloy comprises 16 to 21 wt% of Bi and 17 to 22 wt% of In.

4. The solder alloy of claim 3,
wherein the solder alloy comprises 18 to 21 wt% of Bi and 17 to 20 wt% of In.

5. The solder alloy of claim 1,
wherein the solder alloy comprises 59 to 63 wt% of Sn.

6. The solder alloy of claim 1, further comprising an additive.

7. The solder alloy of claim 6,
wherein the additive comprises at least one inorganic additive selected from a group consisting of Ag, Zn, Cu, P, Ti, Ni, Er, Sb and Al.

8. The solder alloy of claim 6,
wherein the additive comprises at least one carbon-based additive selected from a group consisting of graphene, graphite, and carbon nanotubes (CNTs).

9. The solder alloy of claim 6,
wherein the additive comprises a rare earth element.

10. The solder alloy of claim 1,
wherein a liquidus temperature of the solder alloy is between 180 to 190 °C.

11. The solder alloy of claim 1,
wherein a solidus temperature of the solder alloy is between 150 to 160°C.

12. A solder paste comprising a powder of the solder alloy of any one of claims 1 to 11 and a flux.

13. A solder ball comprising the solder alloy of any one of claims 1 to 11.

14. A solder joint formed from the solder alloy of any one of claims 1 to 11.

15. The solder joint of claim 14,
wherein the solder joint substantially does not include a Bi single phase and a y-InSn phase.
